# EUROPEAN PATENT SPECIFICATION

(11) **EP 0 378 766 B1**
(45) Date of publication and mention of the grant of the patent: **13.12.1995**
(21) Application number: 89120189.9
(22) Date of filing: 31.10.1989
(51) Int. Cl.: G06K 7/10

(54) **Scan board module for laser scanners**
Abtastplattenmodul für Laserabtaster
Module de balayage à plaquette pour des dispositifs de balayage à laser

(30) Priority: 31.10.1988 US 265548; 16.06.1989 US 367007; 10.05.1989 US 349860
(43) Date of publication of application: 25.07.1990
(73) Proprietor: SYMBOL TECHNOLOGIES, INC., Bohemia New York 11716-3300 (US)
(72) Inventor: Krichever, Mark, Hauppauge, N.Y. 11788 (US); Shepard, Howard M., Great River, N.Y. 11739 (US); Gofman, Yuri, Brooklyn, N.Y. 11235 (US)
(74) Representative: Wagner, Karl H., Dipl.-Ing.

(56) References cited:
- EP-A- 0 137 966
- US-A- 4 736 095
- US-A- 4 766 297

## Description

### BACKGROUND OF THE INVENTION

### 1. Field of the Invention

This invention generally relates to laser scanning systems for reading indicia having portions of different light reflectivity such as bar code symbols and, more particularly, to a lightweight, multi-component, compact, scan board module for use in such systems.

### 2. Description of Related Art

Various optical readers and optical scanning systems have been developed heretofore to optically read bar code symbols printed on labels affixed to objects in order to identify the object by optically reading the symbol thereon. The bar code symbol itself is a coded pattern comprised of a series of bars of various widths, and spaced apart from one another to bound spaces of various widths, said bars and spaces having different light-reflecting characteristics. Such readers and systems electro-optically decoded the coded patterns to a multiple alpha-numerical digit representation descriptive of the object. Scanning systems of this general type, and components for use in such systems, have been disclosed, for example, in U.S. Pat. Nos. 4,251,798; 4,360,798; 4,369,361; 4,387,297; 4,593,186; 4,496,831; 4,409,470; 4,460,120; 4,607,156; 4,673,805; 4,736,095; 4,758,717 and 4,760,248, as well as in U.S. Pat. Appln. Serial Nos. 196,021; 7,775; 944,848; 138,563; 148,438; 148,669; 148,555; 147,708 and 193,265; all of which have been assigned to the same assignee as the instant application and are incorporated herein to show the state of the art.

As disclosed in some of the above patents and applications, a particularly advantageous embodiment of such a scanning system resided, inter alia, in optically modifying and directing a laser light beam from a hand-held head which was supported by a user; aiming the head and, in some cases, the laser beam itself at a symbol to be read; repetitively scanning the laser beam and/or the field of view of a detector across the symbol; detecting the laser light reflected off the symbol during scanning; and decoding the detected reflected light.

Another advantageous embodiment resided in mounting at least some, if not all, of the system components in a stand-alone, portable workstation supported on a countertop or like surface.

Hand-held heads and workstations typically, but not necessarily, had different housings with shapes dictated by the particular application. A gun- or flashlight-shaped housing was more suitable for some hand-held applications, whereas a box- or bell-shaped housing was more suitable for some workstation applications. In any event, each differently configured housing dictated how and which system components were mounted therein. Heretofore, such system components had been mounted on rigid support plates, brackets, optical benches, a plurality of printed circuit boards and combinations thereof. Each housing, therefore, had its own custom-designed layout of system components, which was wasteful and inefficient of engineering design time and manpower.

Another drawback of known hand-held systems involves maintaining the components in the head in an optically aligned relationship even after the head was dropped and subjected to shock. Various shock mounts have heretofore been proposed, but a problem exists when a single printed circuit board is used as an alignment fixture inside the head, because this type of board is typically thin and flexes when subjected to shock.

Such flexing disturbes the optical alignment of components associated with the board.

Of the above mentioned patents, specifically US-patent No. 4,736,095 relates to a scanning assembly using a circuit board and a laser tube. Sensor means are located at the opposite side of the scanning means. Also, annular shock collars 60 and 62 are provided. The circuit board does not form a module providing optical alignment. EP-A-0 137 966 discloses a bar code scanner which is manually scanned across the code. The scanner uses shock absorbing mounts and discloses a printed circuit board which contains a tone generator and other analog circuitry. The circuit board does not constitute a module providing optical alignment between optical and scanning assemblies.

In accordance with the present invention a scanning system for reading indicia is provided as set forth in claim 1. Preferred embodiments of the invention are set forth in the dependent claims.

### 1. Objects of the Invention

It is a general object of this invention to overcome the aforementioned problems and drawbacks of known prior art laser scanning systems, in particular to provide easy-to-obtain optical alignment between the optical and the scanner assemblies of the scanning head.

An additional object of this invention is to mount electro-optical components of such systems on a single printed circuit board to constitute a compact scan board which can be mounted in housings of different shapes.

Another object of this invention is to shock mount the heaviest system components in a housing at approximately their centers of mass.

Still another object of this invention is to prevent a printed circuit board used for alignment purposes from flexing and disturbing the optical alignment when subjected to shock.

Yet another object of this invention is to provide a single, compact scan board mountable in variously configured housings and connectable to a remote terminal to constitute an intelligent terminal.

Yet another object of of this invention is to provide a hand-held laser diode scanning head which is lightweight, compact, rugged, non-wrist-and-arm fatiguing, and capable of emitting a laser beam visible to the human eye, whereby the visible laser beam can be readily positioned on and across close-in and far-out symbols.

A further object of this invention is to provide a laser diode scanning head capable of reading not only symbols in contact with the head, but also close-in and far-out symbols.

### 2. Features of the Invention

In keeping with these objects, and others which will become apparent hereinafter; one feature of this invention resides, briefly stated, in a laser scanning system for reading indicia having portions of different light reflectivity, e.g. a bar code symbol having alternating darker bars separated by lighter spaces of variable widths. The system includes a housing, and a light source means therein for generating an incident laser beam. Advantageously, the light source means comprises a semiconductor laser diode which emits laser light at a wavelength of about 670 to about 680 nm so that the emitted laser light is at least marginally visible to the human eye.

Optic means are also provided in the housing, and are operative for optically forming and directing the incident laser beam along an optical path toward the symbol located within a range of working distances relative to the housing. Laser light is reflected off the symbol. At least a returning portion of the reflected light travels away from the symbol back toward the housing.

Scanning means, e.g. a scanning motor, having a reciprocally-oscillatable output shaft on which a reflecting surface such as a scanning mirror is mounted, are mounted in the head for scanning the symbol in a scan, and preferably at a plurality of sweeps per second across the symbol in a repetitive manner. The returning portion of the reflected laser light has a variable light intensity across the symbol during the scan which is due, in the case of a bar code symbol, to the different light-reflective characteristics of the bars and spaces which constitute the symbol.

The system also comprises sensor means, e.g. one or more photodiodes, for detecting the variable light intensity of the returning portion of the reflected laser light over a field of view, and for generating an electrical signal, typically an analog signal, indicative of the detected variable light intensity.

Signal processing means are provided for processing the analog electrical signal, and usually for processing the same to a digitized electrical signal which can be decoded to data descriptive of the symbol being scanned.

The scanning means is operative for scanning either the incident laser beam itself across the symbol, or the field of view of the sensor means, or both.

Decode/control electronic circuitry is sometimes, but not always, provided on-board the housing, but may also be located remotely therefrom. Such circuitry is operative for decoding the digitized signal to the aforementioned data, for determining a successful decoding of the symbol, and for terminating the reading of the symbol upon the determination of the successful decoding thereof. The reading is initiated by actuation of an actuator, typically a manually-actuatable trigger means provided on the housing, and operatively connected to, and operative for actuating, the light source means, the scanning means, the sensor means, the signal processing means, and the decode/control means. The trigger means is actuated once for each symbol, each symbol in its respective turn.

In a hand-held application, the housing, also called a laser scanning head, is supported by a user in his or her hand, is aimed at each symbol to be read and, once the symbol is located, the user actuates the trigger means to initiate the reading. The decode/control means automatically alerts the user when the symbol has been read so that the user can turn his or her attention to the next symbol, and repeat the reading procedure.

One feature of this invention resides in mounting the light source means, the optical means, the scanning means, the sensor means, and the signal processing means on a single, thin, printed circuit board to constitute a compact scan board or module which can be mounted in housings of various shapes depending upon the particular application. The scan board serves as an optical alignment fixture.

Another feature of this invention is embodied in preventing the optical alignment fixture from flexing when subjected to external forces of the type encountered when a hand-held head is dropped on the ground. The laser diode, optical means, sensor means, and a heat sink for the diode together comprise an optical assembly having a center of mass. The scanning motor is part of a scanning assembly which likewise has a center of mass. Optical alignment between the optical and scanning assemblies is provided by the thin printed circuit board supported by, and extending between, the assemblies. Because of the thin and relatively flexible nature of this board, two pairs of shock mounts are provided for shock-mounting the assemblies relative to the head. Each pair of shock mounts is aligned along an axis which extends generally through a respective center of the mass of a respective assembly. By directly shock-mounting the assemblies to the head through their respective centers of mass, their heaviest components, e. g. the scanning motor and the heat sink, will not tend to rotate about the respective axes along which each pair of shock mounts is aligned. The housing will not twist, and the printed circuit board will not flex, thereby reliably ensuring that the assemblies are retained in optical alignment.

The novel features which are considered as characteristic of the invention are set forth in particular in the appended claims. The invention itself, however, both as to its construction and its method of operation, together with additional objects and advantages thereof, best will be understood from the following description of specific embodiments when read in connection with the accompanying drawings.

### BRIEF DESCRIPTION OF THE DRAWINGS

FIG. 1 is a front view of a laser scanning head according to this invention;
FIG. 2 is a vertical sectional view taken on line 2--2 of FIG. 1;
FIG. 3 is a plan sectional view taken on line 3--3 of FIG. 2;
FIG. 4 is a front perspective view of the head of FIG. 1 in use, and schematically connected to other components of a laser scanning system;
FIG. 5 is a perspective view depicting various cross-sections of the laser beam emitted by the head of FIG. 1;

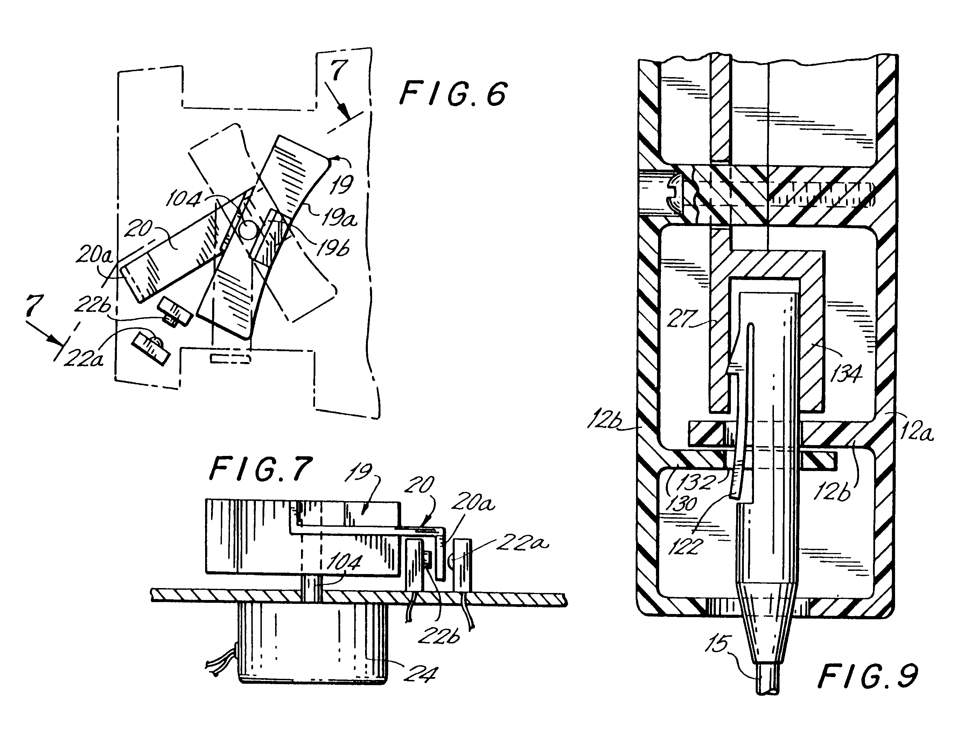

FIG. 6 is a top plan view of part of the optical assembly of FIG. 3;
FIG. 7 is a side view of the optical assembly of FIG. 6;
FIG. 8 is an enlarged sectional view of the optical assembly of FIG. 3; and
FIG. 9 is an enlarged sectional view taken on line 9--9 of FIG. 2.
FIG. 10 is a side view of a scan board according to this invention;
FIG. 11 is a side view of one embodiment of an integrated terminal according to this invention;
FIG. 12 is a side view of another embodiment of an integrated terminal according to this invention; and
Fig. 13 is a side view of yet another embodiment of an integrated terminal according to this invention.

### DETAILED DESCRIPTION OF THE PREFERRED EMBODIMENTS

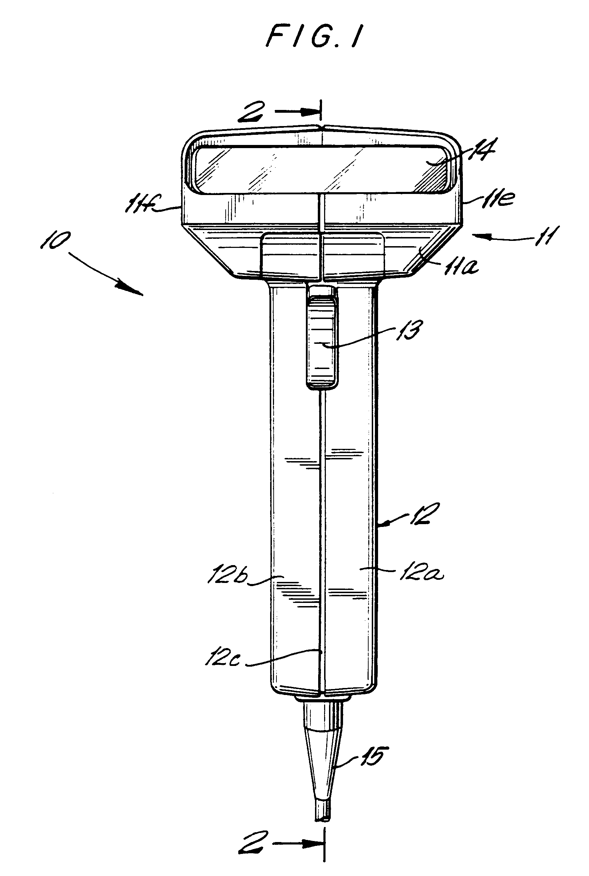

Referring now to FIGs. 1-4 of the drawings, reference numeral 10 generally identifies a lightweight (less than one pound), streamlined, hand-held, fully-portable, easy-to-manipulate, non-arm-and-wrist fatiguing laser scanning head supportable entirely by a user for use in a laser scanning system operative for reading, scanning and/or analyzing symbols, and aimable both prior to, and during, the reading thereof, by the user at the symbols, each symbol in its turn. The term "symbol", as used herein, is intended to cover indicia composed of different portions having different light-reflective properties at the wavelength of the light source, e.g. a laser, being utilized. The indicia may be the omnipresent Universal Product Code (UPC) symbol, or any of the black and white industrial symbols, e.g. Code 39, Codabar, Interleaved 2 of 5, etc. The indicia may also be any alphabetic and/or numeric characters. The term "symbol" is also intended to cover indicia located in a background field, wherein the indicia, or at least a portion thereof, have a different light-reflectivity property than that for the background field. In this latter definition, the "reading" of the symbol is of particular benefit in the fields of robotics and object recognition.

Turning now to FIG. 1, the head 10 includes a generally gun-shaped housing having a handle portion 12 of generally rectangular cross-section and generally elongated along a handle axis, and a generally horizontally-elongated barrel or body portion 11. The cross-sectional dimension and overall size of the handle portion 12 is such that the head 10 conveniently can fit and be held in a user's hand. The body and handle portions are constituted of a lightweight, resilient, shock-resistant, self-supporting material, such as a synthetic plastic material. The plastic housing preferably is injection-molded, but can be vacuum-formed or blow-molded to form a thin, hollow shell which bounds an interior space whose volume measures less than a value on the order of 50 cubic inches and, in some applications, the volume is on the order of 25 cubic inches or less. Such specific values are not intended to be self-limiting, but to provide a general approximation of the overall maximum size and volume of the head 10. The shell is formed of two housing parts 12a, 12b meeting along a generally vertical joining line 12c.

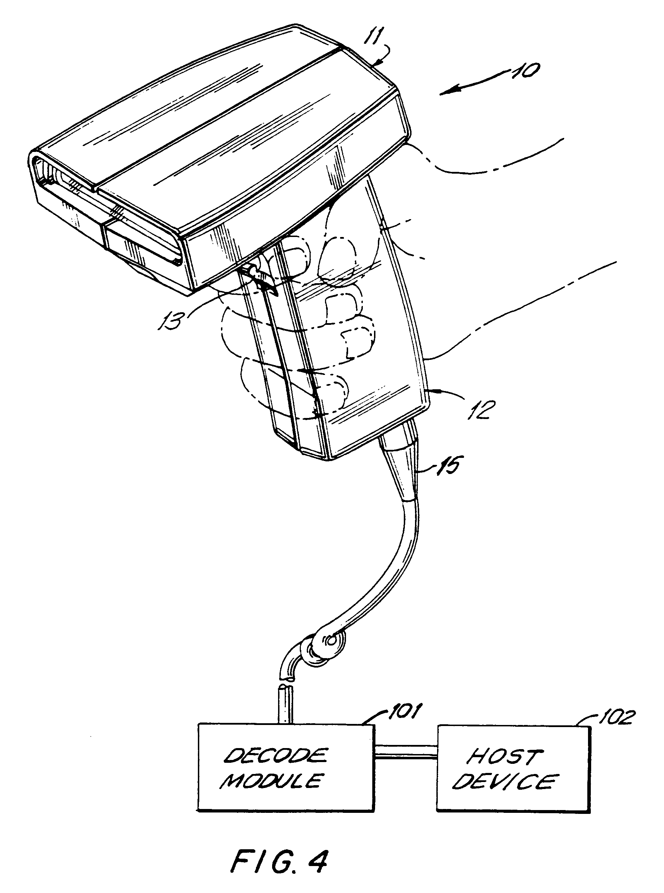

As considered in an intended position of use as shown in FIG. 4, the body portion 11 has a front prow region or nose having an inclined front wall 11a. The body portion 11 also has a rear region or stern having a rear wall 11b spaced rearwardly of the inclined front wall 11a. The body portion 11 also has a top wall 11c, a bottom wall 11d below the top wall 11c, and a pair of opposed side walls 11e, 11f between the top and bottom walls. The front wall 11a is sloped relative to the top and bottom walls.

A manually-actuatable, and preferably depressible, trigger 13 is mounted on a cantilever resilient arm 13a for movement relative the head in a forwardly-facing region where the handle and body portions meet and where the user's forefinger normally lies when the user grips the handle portion in the intended position of use. The bottom wall 11d has a lower opening, and the handle 12 has a forwardly-facing slot through which the trigger 13 projects and is moved. The arm 13a has one end overlying a trigger switch 25 which is switched from an open to a closed state upon depression of the trigger 13.

A window 14 is stationarily mounted at the nose and is light-transmissive to allow laser light to pass from the interior to the exterior of the head, and vice versa.

A flexible, non-bulky, coil-type electrical cable 15 with multiple freedoms of movement interconnects the head 10 to the remainder of the components of the laser scanning system, whose operation is explained in greater detail below.

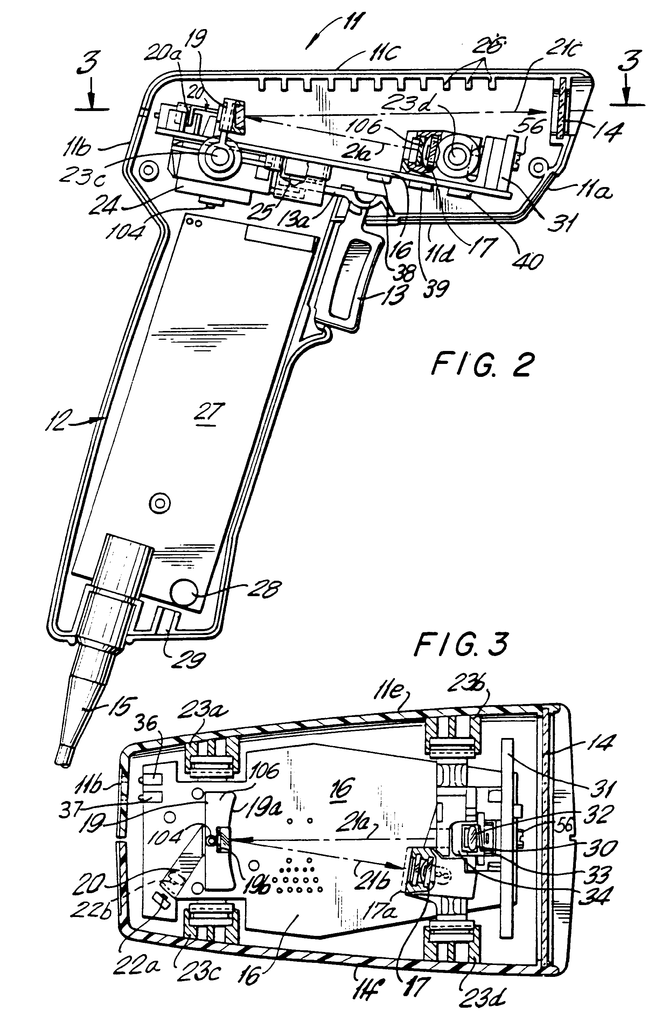

A plurality of components are mounted in the head and, as explained below, at least some of them are actuated by the trigger 13, either directly or indirectly, by means of a control microprocessor. One of the head components is an actuatable laser light source (see FIGs. 3 and 4), e.g. a semiconductor laser diode 33, operative, when actuated by the trigger 13, for propagating and generating an incident laser beam whose light, as explained above, is at least marginally visible to the human eye. The wave-length of the emitted beam is in the range from about 670 nm to about 680 nm. The emitted laser diode beam is highly divergent; diverges differently in different planes parallel and perpendicular to the longitudinal direction of beam propagation; is non-radially symmetrical, i.e. anamorphic; and has a beam cross-section resembling an oval. The diode may be of the continuous wave or pulse type. The diode requires a low voltage (e.g 12 v DC or less) supplied by a power regulator and a battery (DC) source which may be provided within the head, or by a re-chargeable battery pack accessory detachably mounted on the head, or by a power conductor in the cable 15 connected to the head from an external power supply (e.g. DC source). Diodes which emit laser light of different wavelengths are also within the scope of this invention.

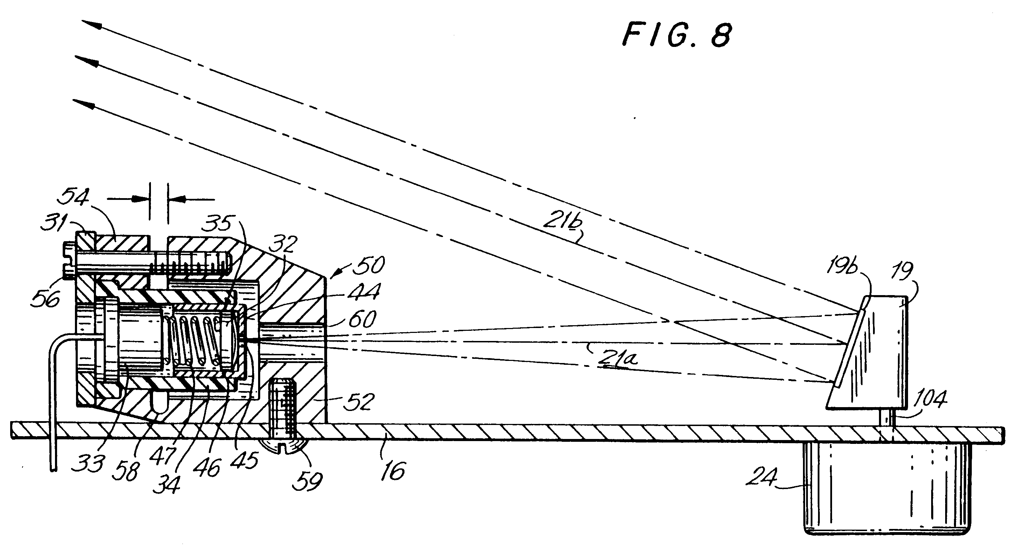

As best shown in FIG. 8, an optical assembly 30 is mounted in the head on a thin, flexible, printed circuit board 16 and adjustably positioned relative to the same for optically modifying and directing the emitted laser beam along a first optical path 21a, 21c toward a reference plane which is located exteriorly of the head, either at the nose for reading symbols in contact with the front wall 11a, or forwardly of the nose for reading symbols out of contact with the front wall 11a. The reference plane lies generally perpendicular to the longitudinal direction along which the emitted laser beam propagates. A symbol to be read is located in the vicinity of the reference plane, either at, or at one side, or at an opposite side, of the reference plane; that is, anywhere within the depth of field of the optically modified laser beam and within a range of working distances as measured relative to the head. The laser beam reflects off the symbol as a specular component in one direction and as a scattered component in many directions, and that portion of the scattered laser light which travels along a second optical path 21c and 21b away from the symbol back toward the head is known herein as the returning portion which, of course, also is at least marginally visible to the user.

As best shown in FIG. 8, the optical assembly includes an elongated, cylindrical optical tube 34 having at one end region a cylindrical bore in which an annular casing portion of the diode 33 is snugly received to hold the diode in a fixed position, and at the opposite end region of the optical tube 34 a lens barrel 35 is mounted for longitudinal movement. The lens barrel 35 includes an aperture stop 45, blocking wall portions 44 surrounding and bounding the aperture stop, and cylindrical side wall portions 46 which bound an interior space.

The optical assembly further includes a focusing lens 32, e.g. a plano-convex lens, located within the interior space of the side wall portions 46 in the first optical path, and operative (with the stop) for focusing the emitted laser beam at the reference plane. The aperture stop 45 may be located on either side of the lens 32, but preferably on the downstream side. A biasing means or tensioned coil spring 47 is located within the optical tube, and has one coil end bearing against a casing portion of the diode, and another coil end bearing against a planar side of the lens 32. The spring constantly urges the lens against the blocking wall portions, thereby fixedly locating the lens relative to the aperture stop. The lens and aperture stop are jointly moved when the lens barrel is longitudinally moved. The side wall portions are initially received are threaded or sliding relationship with an inner circumferential wall bounding the optical tube, and are thereupon fixed e.g. by glueing or clamping, to the inner circumferential wall when a desired longitudinal spacing between the lens and the aperture stop on the one hand, and the diode on the other hand, has been obtained. The longitudinal movement between the side wall portions and the inner circumferential wall of the tube constitutes an adjustable positioning means for the lens and the aperture stop, and the fixing in position of the lens and the aperture stop relative to the diode constitutes a means for fixedly locating the lens and the aperture stop at a predetermined spacing from the diode.

The aperture stop has a cross-section which is, as explained below, about equal to the cross-section of the emitted laser beam at the aperture stop, thereby permitting a major portion of the emitted laser beam to pass through the aperture stop downstream along the first optical path en route to the symbol. The aperture stop cross-section preferably is rectangular or oval, in which case, the longer dimension of the rectangular or oval cross-section is aligned with the larger divergence angle of the laser beam to transmit more energy to the symbol.

The optical assembly includes an optical block 50 having a front portion 52 and a rear portion 54 together bounding an interior in which the diode 33, optical tube 34, lens barrel 35 and the aforementioned components contained therein are received. A heat sink 31 is mounted in intimate thermal contact with the diode to conduct heat away from the same. An elevation adjustment means, including at least one threaded element 56, passes with clearance through aligned holes formed respectively in the heat sink and the rear portion 54, and is threaded into a threaded bore formed in the front portion 52. A hinge 58 is advantageously realized by providing a thin, flexible, weakened zone in the optical block between the front and rear portions thereof. The front portion 52 is stationarily mounted on the board 16 by anchors 59. The diode, tube, barrel and the components contained therein are mounted on the rear portion for movement therewith. Upon turning the element 56 in either circumferential direction about an axis along which the element 56 extends, the rear portion and all the components supported thereon will be angularly moved about the hinge 58 relative to the stationary front portion, thereby raising or lowering the emitted light beam which exits the block 50 through a clearance passage 60 which is dimensioned so as not to block the beam throughout its angular range of adjustment.

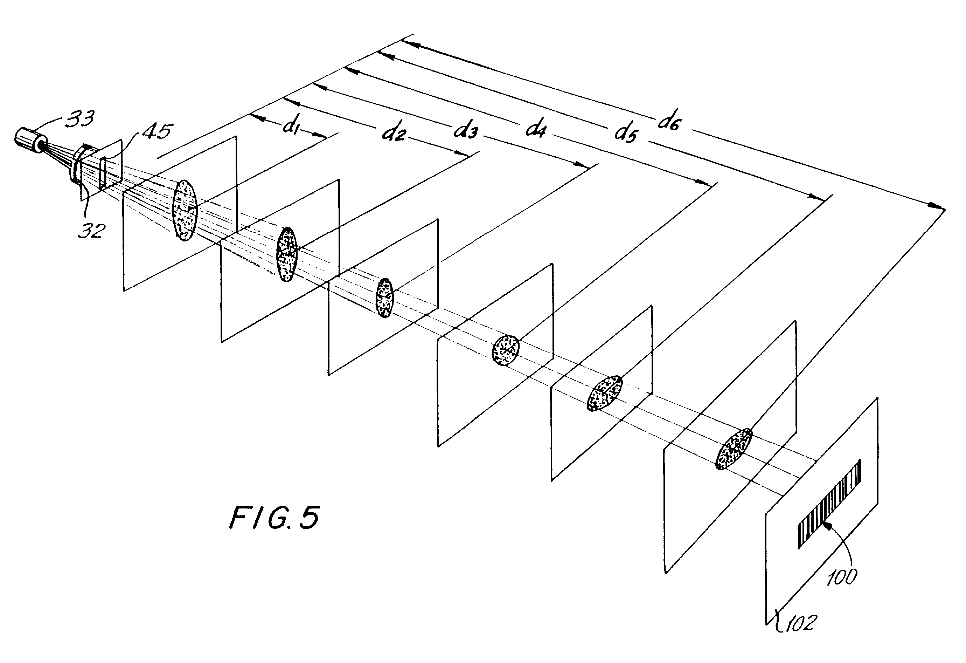

The laser beam that passes through the passage 60 is directed rearwardly by the optical assembly along path 21a within the head to a generally planar scanning mirror 19b for reflection therefrom. The scanning mirror 19b forwardly reflects the laser beam impinging thereon along path 21c through the forwardly-facing, laser-light-transmissive window 14 and to the symbol. As best shown in FIG. 5, a representative symbol 100 in the vicinity of the reference plane 102 is shown and, in the case of a bar code symbol, is comprised of a series of vertical bars spaced apart of one another along a longitudinal direction. A laser beam spot is focused on the symbol. When the scanning mirror is, as explained below, reciprocally and repetitively oscillated transversely to sweep the laser beam lengthwise across all the bars of the symbol, a linear scan is generated. The linear scan can be located anywhere along the height of the bars provided that all the bars are swept. The length of the linear scan is longer than the length of the longest symbol expected to be read and, in a preferred case, the linear scan is on the order of 3 inches at the reference plane.

The scanning mirror 19b is mounted on a scanning means, preferably a high-speed scanner motor 24 of the type shown and described in U.S. Pat. No. 4,387,397, the entire contents of said patent being incorporated herein by reference and made part of the instant application. For the purposes of this application, it is believed to be sufficient to point out that the scanner motor 24 has an output, shaft 104 on which a support bracket 19 is fixedly mounted. The scanning mirror is fixedly mounted on the bracket. The motor is driven to reciprocally and repetitively oscillate the shaft in alternate circumferential directions over arc lengths of any desired size, typically less than 360°, and at a rate of speed on the order of a plurality of oscillations per second. In a preferred embodiment, the scanning mirror and the shaft jointly are oscillated so that the scanning mirror repetitively sweeps the laser diode beam impinging thereon through an angular distance or arc length at the reference plane of about 32° and at a rate of about 20 scans or 40 oscillations per second.

Referring again to FIG. 2, the returning portion of the scattered component of the reflected laser light has a variable light intensity, due to the different light-reflective properties of the various parts that comprise the symbol 100, over the symbol during the scan. The returning portion of the reflected laser light is collected by a generally concave, spherical collecting mirror 19a, and is a broad conical stream of light in a conical collecting volume centered on path 21c. The collecting mirror 19a reflects the collected conical light into the head along path 21b through a laser-light-transmissive element 106 to a sensor means, e.g. a photosensor 17. The photosensor 17, preferably a photodiode, detects the variable intensity of the collected laser light over a field of view which extends along, and preferably beyond, the linear scan, and generates an electrical analog signal indicative of the detected variable light intensity.

The photosensor "sees" a collection zone on the symbol. The aforementioned angular adjustment means ensures that the emitted laser beam impinges on the symbol at the collection zone when the laser spot impinges on the symbol.

The collecting mirror 19a is also mounted on the support bracket 19 and, when the scanning mirror is actuated by the trigger, the collecting mirror is reciprocally and repetitively oscillated transversely, sweeping the field of view of the photodiode length-wise across the symbol in a linear scan.

The scanning mirror and the collecting mirror are, in a preferred embodiment, of one-piece construction, but the scanning mirror can also be a discrete, small, planar mirror attached by glue, or molded in place, at the correct position and angle on a discrete, front surfaced, silvered concave mirror. The concave collecting mirror serves to collect the returning portion of the laser light and to focus the same on the photodiode.

Also mounted in the head are various electrical subcircuits mounted on board 16. For example, signal processing means on board 16 are operative for processing the analog electrical signal generated by the sensor, and for generating a digitized video signal. Data descriptive of the symbol can be derived from the video signal. Suitable signal processing means for this purpose was described in U.S. Pat. No. 4,251,798. Component 39 on board 16 constitutes drive circuitry for the scanner motor, and suitable motor drive circuitry for this purpose was described in U.S. Pat. No. 4,387,297. Component 40 on board 16 is a voltage converter for converting the incoming voltage to one suitable for energizing the laser diode 33.

The digitized video signal is conducted, in one embodiment, along cable 15 to decode/control means 101 (see FIG. 4) operative for decoding the digitized video signal to a digitized decoded signal from which the desired data descriptive of the symbol is obtained, in accordance with an algorithm contained in a software control program. The decode/control means includes a PROM for holding the control program, a RAM for temporary data storage, and a control microprocessor for controlling the PROM and RAM. The decode/control means determines when a successful decoding of the symbol has been obtained, and also terminates the reading of the symbol upon the determination of the successful decoding thereof. The initiation of the reading is caused by depression of the trigger. The decode/control means also includes control circuitry for controlling the actuation of the actuatable components in the head, as initiated by the trigger, as well as for communicating with the user that the reading has been automatically terminated as, for example, by sending control signals to indicator lamps 36, 37 to illuminate the same.

The decoded signal is conducted to a remote, host computer 103 which serves essentially as a large data base, stores the decoded signal and, in some cases, provides information related to the decoded signal. For example, the host computer can provide retail price information corresponding to the objects identified by their decoded symbols.

In another embodiment, the decode/control means and a local data storage means are mounted on another printed circuit board 27 in the handle portion, and store multiple decoded signals which have been read. The stored decoded signals thereupon can be unloaded to a remote host computer. By providing the local data storage means, the use of the cable during the reading of the symbols can be eliminated -- a feature which is very desirable in making the head as freely manipulatable as possible. A beeper 28 is also optionally mounted on board 27 so that the user can hear through a port 29 in the handle when a symbol has been successfully read.

The assembly at the forward end of the board 16, including the optical block 50, the heat sink 31, the laser diode 33 and its associated optics, together with the photodetector 17, has a center of mass which approximately extends along an axis which is co-linear with an axis along which front shock mounts 23b, 23d extend (see FIG. 2). The assembly at the rear end of the board 16, including the scanning motor 24, the collecting and scanning mirrors on bracket 19, the arm 20, the diode 22a and receiver 22b also has a center of mass which approximately extends along an axis which is co-linear with an axis along which rear shock mounts 23a, 23c extend. By so positioning the heaviest components in the head, namely, the heat sink and the scanning motor, on, or close to, these shock mounting axes, the tendency of the heat sink and the scanning motor to turn around the shock mounting axes is minimized, thereby resisting the tendency of the head from twisting and the tendency of the optical and scanning assemblies from moving out of optical alignment in the event that the head is dropped.

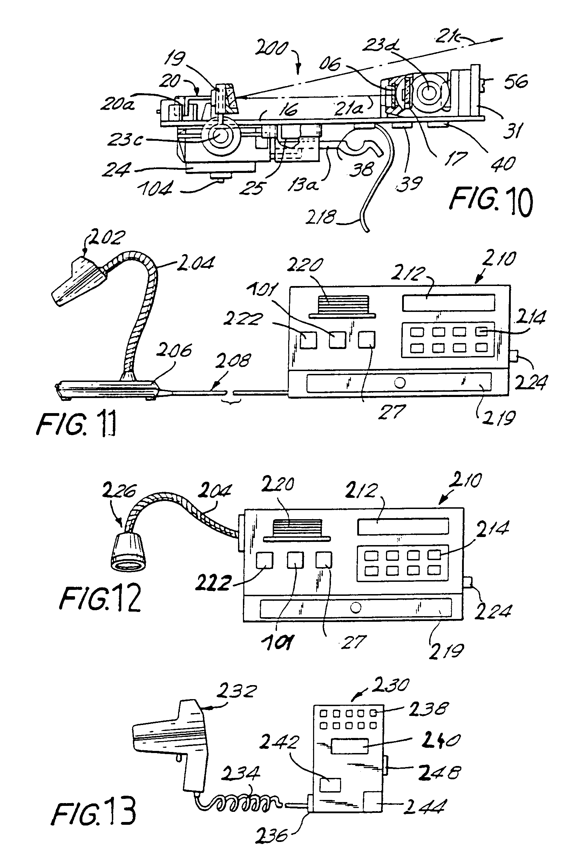

FIG. 10 shows the printed circuit board 16 and the aforementioned light source means, optic means, scanning means, sensor means and analog-to-digital signal processing means mounted thereon and together constituting a scan board or module 200 mountable as a single unit into housings of virtually any shape, e.g. the hand-held, gun-shaped head 10 shown in FIG. 4. By eliminating the trigger arm 13a and trigger switch 25, the resulting module can be mounted in workstations such as the housings 202 and 226 shown in FIGs. 11 and 12, respectively. A flat ribbon cable 218 conducts electrical signals to and away from the electrical components on the board 16.

The housing 202 is mounted at one end of a semi-rigid, bendable, shape-retaining arm 204 whose opposite end is connected to a base 206 mounted on a support surface, such as a countertop, to constitute a portable, stand-alone workstation. The decode module 101 can be mounted inside base 206. The cable 218 is routed through the interior of arm 204. An electrical cable 208 connects the base 206 to a cash register-type terminal 210 having a display 212 for displaying information, including data descriptive of the symbol being scanned, to an operator; a keyboard 214 for enabling the operator to manually enter information, including data descriptive of the symbol being scanned; a cash drawer 219 for holding money, a paper tape 220 for recording information and providing a receipt to a customer of the purchase of an object bearing the symbol being scanned; a recharger 222 for recharging and supplying electrical power to a battery mounted either within the base 206 or the head 202; the decode module 101 (in case the decode module is not located within the base 206 or head 202); and local data storage means 27 (in case the local data storage means is not located within the base 206 or head 202). The data stored within terminal 210 can be unloaded via connector 224 to the host computer 103. The entire installation shown in FIG. 11 is known as an integrated terminal. The arm 204 can be manipulated with multiple degrees of freedom of movement to insure that the exiting laser beam strikes the symbol and/or the returning reflected light is collected from the symbol.

The integrated terminal shown in FIG. 12 has the same register 210. The housing 226 has a bell- or lamp-like shape. The arm 204 has its opposite end not connected to any base, but, instead, directly connected to the register 210. The integrated terminal of FIG. 12 is intended as a permanent scanning installation.

The laser scanning heads of FIGs. 2, 11, and 12 are of the retro-reflective type wherein the outgoing incident laser beam, as well as the field of view of the sensor means, are scanned. It will be readily understood that other variants also are within the the spirit of this invention. For example, the outgoing incident laser beam can be directed to, and swept across, the symbol through one window on the head, while the field of view is not scanned and the returning laser light is collected through another window on the head. Also, the outgoing incident beam can be directed to, but not swept across, the symbol, while the field of view is scanned.

Each head may further include deactivation apparatus for changing the state of a surveillance device associated with a tag or label on which the symbol is provided, such as described in U.S. Ser. No. 236,249, assigned to the assignee of the instant application. The terminal need not be a cash register, but may be a hand-held box.

Thus, as shown in FIG. 13, terminal 230 is sized to fit in the palm of one's hand, and is operatively connected to a hand-held head 232 in which the scan module 200 is mounted. The conductor means 218 is routed through a cable 234 having one end connected to the head, and an opposite end detachably connected at connector 236 to terminal 230. The terminal 230 has a keyboard 238 for entering data and/or control functions, a display 240 for displaying data read by the head 232 or entered via the keyboard 238, a local data storage 242 for storing the data read by the head 232 or entered via the keyboard 238, a recharger 244 with battery backup, and a data transfer connector 248 for downloading the data in storage 242 to a host computer.

It will be understood that each of the elements described above, or two or more together, also may find a useful application in other types of constructions differing from the types described above.

While the invention has been illustrated and described as embodied in a scan board module for laser scanners and a laser scanning system, specifically one with a hand-held head, it is not intended to be limited to the details shown, since various modifications and structural changes may be made without departing in any way from the scope of the present invention as defined by the claims.

One of the features of the present invention is to utilize the trigger 13 to operate the laser scanner in different scanning modes.

There are a number of possible scanning modes that we are considering in connection with hand-held laser scanners: (a) the normal triggered mode; (b) the triggered spot and scan mode; and (c) the dual position trigger mode according to the present invention.

In the normal triggered mode, the laser beam is normally off. A trigger is used in the normal triggered mode to initiate the rapid and repetitive scanning of the target symbol. For proper counting, it is necessary to distinguish between the situation in which many scans have been performed on a single object, or the situation in which one or more scans have been performed on a plurality of objects with identical symbols. The capability of sensing each object to be scanned in its turn is critical for successful applications of bar code scanning in data collection, inventory, and similar.

As is known in prior art scanners (such as described in U.S. Patent No. 4,387,297) a trigger is operative for actuating the scanning means to repetitively sweep the bar code symbol a number of times each time the trigger is actuated. The trigger is preferably a manually-depressible switch mounted on the housing in the vicinity of the interconnection of the barrel and handle portions of the housing. The trigger switch is located on the handle portion such that the forefinger of the user's hand can be used to manually depress the switch. Each time the switch is depressed the scanning means sweeps the symbol many times, until a complete decode or a time out is reached.

In the triggered mode, when the decode circuitry successfully decodes the symbol, the decode circuitry generates a successful decode signal and may actuate an indicator located in the scanner. The indicator may be an auditory-type beeper and/or a light emitting diode. When the beeper sounds and/or when the diode lights up, then the user knows that the scanning for that particular symbol has bee terminated.

In the triggered spot and scan mode described in U.S. Patent Application No. 260,692, after the trigger is pulled, the beam comes on at a narrow angle. In such an operational mode, a very bright, short line about 1" in length is formed by the laser narrow scanning beam. The bright small line is used by the user holding the laser scanner to manually aim and direct the beam to the location where the user actually sees the bar code is located. When an indicia pattern indicative of a bar code symbol has been detected, the beam will widen thereby sweeping the entire symbol so that it can be decoded.

In the dual position spot and scan mode, according to the present invention, after the trigger is pulled to a first position the beam is directed in a fixed, non-scanning path. In such an operational mode, a very bright spot about 240 microns in diameter (at about 3 1/2" from nose) is formed by the laser narrow scanning beam. The bright spot is used by the user holding the laser scanner to manually aim and direct the beam to the location where the user actually sees the bar code is located. Typically the user will position the spot approximately at the center of the bar code. The user will then pull the trigger to a second position to initiate scanning. When the second position of the trigger is reached, the beam will widen to sweep the entire symbol so that it can be decoded. Although in some cases the beam may be dimly reflective or not visible to the user, since the beam has already beam positioned, the sweep will cover the symbol and decode will take place.

## Claims

1. A scanning system for reading indicia having portions of different light reflectivity, e.g. a bar code symbol having alternating darker bars separated by lighter spaces of variable widths,
said scanning system comprising:
(a) a single printed circuit board (16) constituting a compact scan board or module,
(b) an optical assembly (30) mounted on said board (16), said optical assembly comprising a light source means (33), optical beam forming means (32,45) and light sensor means (17),
(c) a scanning assembly (19, 19b, 24) adapted to scan said indicia, wherein the optical alignment between the optical and scanning assemblies is provided by said circuit board supported by, and extending between, said assemblies and serving as an optical alignment fixture, and
(d) shock mount means (23a-d) provided for shock mounting the assemblies relative to the head.

2. The system of claim 1, wherein said optical assembly has a center of mass, and the scanning assembly likewise has a center of mass, and each pair of shock mounts is aligned along an axis which extends generally through a respective center of the mass of a respective assembly, such that by directly shock-mounting the assemblies to the head through their respective centers of mass, their heaviest components will not tend to rotate about the respective axes along which each pair of shock mounts is aligned.

3. The system of claim 1 or 2, wherein said sensor means have a field of view and are operative for generating an electrical analog signal indicative of light of variable intensity reflected off the indicia;
signal processing means on the board are adapted for converting the analog signal to a digital signal indicative of the indicia;
said scanning means on the board are adapted for scanning at least one of a laser beam and said field of view in a scan across the indicia; and
conductor means on the board are adapted for conducting the digital signal away from the board.

4. The system as recited in any of the preceding claims, wherein the light source means, optical means and scanning means are commonly mounted on the board in an optically-aligned relationship.

5. The system as recited in claim 3 or 4, wherein the conductor means is a flat ribbon cable.

6. The system of any of the preceding claims comprising:
(A) a lightweight, portable, hand-held head, including read-start means on the board, and operative for initiating reading of the indicia;
(B) a terminal operatively connected to the head and including
display means for displaying data descriptive of the indicia being read,
keyboard means for enabling an operator to enter information relating to the indicia being read, and
data storage means for storing the data descriptive of the indicia being read;
(C) decode means located in at least one of said head and said terminal, and operative for decoding the digital signal into the data descriptive of the indicia being read;
(D) a rechargeable power supply located in at least one of said head and said terminal, and operative for supplying electrical power to the head; and
(E) read-finish means located in at least one of said head and said terminal, and operative for terminating reading of the indicia upon a determination that the indicia has been successfully read.

7. The system as recited in any preceding claim, wherein the light source means includes a laser diode and a heat sink for conducting waste heat away from the diode.

8. The system as recited in any preceding claim, wherein the board is a relatively thin and flexible sheet.

9. The system as recited in any of the claims 6 to 8, and further comprising a base supported on a support surface, and a bendable, hollow, elongated conduit having one end connected to the head, and an opposite end connected to the base, said bendable conduit having multiple freedoms of movement.

10. The system as recited in claim 9, wherein the conductor means includes a wire routed through the interior of the conduit.

11. The system as recited in any of claims 6 to 10 and further comprising an electrical cable having one end connected to the base or head and an opposite end connected to the terminal.

12. The system as recited in any of claims 6 to 11, wherein the terminal is a cash register, or, wherein the terminal includes a hand-held housing.

13. The system as recited in any of claims 6 to 12 further comprising an elongated, bendable, hollow conduit having one end connected to the head and an opposite end connected to the terminal, said bendable conduit having multiple freedoms of movement, and wherein preferably the conductor means includes a wire routed through the interior of the conduit.

14. The system of any of the preceding claims including a scanning assembly comprising a reciprocally oscillatable scanning motor (24) having a drive shaft (104) on which a mirror (196) is mounted for joint repetitive and cyclical oscillating movement a plurality of times per second, said mirror directing the laser beam toward the reference plane and to and across the indicia to be read for scanning the same, said mirror also collecting the returning portion of the reflected laser light and directing the same to the sensor means.

15. The system of any of the preceding claims comprising:
(A) a scanning unit including
(i) light source means for emitting a laser beam,
(ii) optical means for optically modifying and directing the laser beam along an optical path toward the indicia for reflection therefrom,
(iii) sensor means having a field of view, and operative for detecting at least a portion of light of variable intensity reflected off the indicia, and for generating an electrical analog signal indicative of the detected light intensity,
(iv) scanning means for scanning at least one of said laser beam and said field of view in a scan across the indicia,
(v) electronic processing means operative for converting the analog signal to an electrical signal indicative of the indicia being scanned, and
(vi) means for mounting said light source means, optical means, sensor means, scanning means and electronic processing means on the scanning unit;
(B) a terminal unit operatively connected to the scanning unit and normally located remotely therefrom, said terminal unit including
(i) keyboard means for enabling an operator to manually enter information relating to the indicia being scanned, and
(ii) display means for displaying to the operator the information relating to the indicia being scanned;
(C) read-control means located in at least one of said units, and operative for initiating reading of the indicia, and for terminating reading of the indicia upon a successful determination that the indicia has been successfully read;
(D) decode means located in at least one of said units, and operative for decoding the digital signal into digitized data descriptive of the indicia being read;
(E) data storage means located in at least one of said units, and operative for storing the digitized data descriptive of the indicia being read;
(F) a rechargeable power supply located in at least one of said units, and operative for supplying electrical power to the units; and
(G) communication means for providing electrical communication between the units.

16. The system as recited in claim 15, wherein the electronic processing means are also mounted on said printed circuit board, to constitute a scan board module.

17. The system as recited in claim 15, wherein the scanning unit further includes means for supporting the housing above a work surface across which the indicia are passed.

18. The system as recited in claim 15, wherein the communication means includes first transceiver means on the scanning unit, and operative for transmitting at least one of said digital signal and said digitized data through the air by electromagnetic wave transmission to second transceiver means on the terminal unit, said second transceiver means being operative for receiving said at least one transmitted digital signal and digitized data.

19. The system as recited in claim 15, wherein the data storage means is located at the terminal unit, and wherein the terminal includes data transfer means for transferring the digitized data stored in the data storage means to a remote host computer.

## Patentansprüche

1. Scan- bzw. Abtastsystem zum Lesen von Kennzeichnungen bzw. Indizien mit Teilen von unterschiedlicher Lichtreflektivität, zum Beispiel ein Strichcodesymbol mit alternierenden dunkleren Strichen, die durch hellere Zwischenräume variabler Breite getrennt sind, wobei das Scansystem folgendes aufweist:
(a) eine einzelne gedruckte Schaltungsplatine (16), die eine kompakte Scanplatine bzw. -platte oder - modul aufbaut,
(b) eine optische Anordnung (30), und zwar befestigt auf der Platine (16), wobei die optische Anordnung Lichtquellenmittel (33), optische Strahlbildemittel (32, 45) und Lichtabfühlmittel (17) aufweist,
(c) eine Scan- bzw. Abtastanordnung (19, 19b, 24) geeignet zum Scannen der Kennzeichnungen, wobei die optische Ausrichtung bzw. Justage zwischen den optischen und Scananordnungen durch die Schaltungsplatine vorgesehen ist, die durch die Anordnungen getragen wird und sich zwischen diesen erstreckt, und als eine optische Ausrichtungsbefestigungsvorrichtung dient, und
(d) Schock- bzw. Stoßbefestigungsmittel (23a-d), vorgesehen zum Stoßbefestigen der Anordnungen relativ zu dem Kopf.

2. System nach Anspruch 1, wobei die optische Anordnung einen Schwerpunkt besitzt und die Scananordnung ebenfalls einen Schwerpunkt besitzt und wobei jedes Paar von Stoßbefestigungen entlang einer Achse ausgerichtet ist, die sich im allgemeinen durch einen jeweiligen Schwerpunkt einer jeweiligen Anordnung erstreckt, so daß durch direktes Stoßbefestigen der Anordnung mit dem Kopf durch ihre jeweiligen Schwerpunkte deren schwerste Komponenten nicht dazu neigen werden, sich um die jeweiligen Achsen, entlang denen jedes Paar von Stoßbefestigungen ausgerichtet ist, zu drehen.

3. System nach Anspruch 1 oder 2, wobei die Abfühlmittel ein Blickfeld besitzen und betriebsbereit sind zum Erzeugen eines elektrischen analogen Signals, das Licht variabler Intensität, das von den Kennzeichnungen wegreflektiert wurde, anzeigt; Signalverarbeitungsmittel auf der Platine geeignet sind zum Umwandeln des analogen Signals in ein digitales Signal, das die Kennzeichnungen anzeigt; die Scanmittel auf der Platine geeignet sind zum Scannen bei dem Laserstrahl und/oder dem Blickfeld in einem Scan über die Kennzeichnungen; und die Leitermittel auf der Platine geeignet sind, zum Leiten des digitalen Signals weg von der Platine.

4. System nach einem der vorhergehenden Ansprüche, wobei die Lichtquellenmittel, die optischen Mittel und die Scanmittel gemeinsam auf der Platine in einer optisch ausgerichteten bzw. justierten Beziehung befestigt sind.

5. System nach Anspruch 3 oder 4, wobei die Leitermittel ein flaches Bandkabel sind.

6. System nach einem der vorhergehenden Ansprüche, das ferner folgendes aufweist:
(A) einen leichtgewichtigen, tragbaren handgehaltenen Kopf, der Leseanfangs- bzw. Lesetastmittel auf der Platine und betriebsfähig zum Initiieren des Lesens der Kennzeichnungen, aufweist;
(B) ein Terminal, das betriebsmäßig mit dem Kopf verbunden ist und folgendes aufweist:
Anzeigemittel zum Anzeigen von Daten, die für die Kennzeichnungen, die gelesen werden, beschreibend sind,
Tastaturmittel zum Ermöglichen einer Bedienungsperson Information bezüglich der Kennzeichnungen, die gelesen werden, einzugeben, und
Datenspeichermittel zum Speichern der Daten, die für die Kennzeichnungen, die gelesen werden, beschreibend sind;
C) Decodiermittel, und zwar angeordnet in dem Kopf und/oder dem Terminal und betriebsfähig zum Decodieren des digitalen Signales in die Daten, die für die Kennzeichnungen, die gelesen werden, beschreibend sind;
D) eine wiederaufladbare Strom- bzw. Spannungsversorgung, und zwar angeordnet in dem Kopf und/oder dem Terminal und betriebsfähig zum Liefern von elektrischer Leistung an den Kopf; und
(E) Lesebeendigungsmittel, und zwar angeordnet in dem Kopf und/oder dem Terminal und betriebsfähig zum Beenden des Lesens der Kennzeichnungen, und zwar auf eine Bestimmung hin, daß die Kennzeichnungen erfolgreich gelesen wurden.

7. System nach einem der vorhergehenden Ansprüche, wobei die Lichtquellenmittel eine Laserdiode und einen Kühlkörper zum Leiten von überschüssiger Wärme weg von der Diode aufweisen.

8. System nach einem der vorhergehenden Ansprüche, wobei die Platine bzw. Platte ein relativ dünnes und flexibles Flächenelement oder Blech ist.

9. System nach einem der Ansprüche 6 bis 9, das ferner folgendes aufweist: eine Basis getragen auf einer Tragoberfläche und eine biegbare, hohle, langgestreckte Leitung mit einem Ende verbunden mit dem Kopf und einem gegenüberliegenden bzw. entgegengesetzten Ende verbunden mit der Basis, wobei die biegbare bzw. krümmbare Leitung mehrfache Freiheitsgrade der Bewegung besitzt.

10. System nach Anspruch 9, wobei die Leitermittel einen Draht umfassen, der durch das Innere der Leitung verlegt ist.

11. System nach einem der Ansprüche 6 bis 9, das ferner folgendes aufweist: ein elektrisches Kabel mit einem Ende verbunden mit der Basis oder dem Kopf und einem gegenüberliegenden bzw. entgegengesetzten Ende verbunden mit dem Terminal.

12. System nach einem der Ansprüche 6 bis 11, wobei das Terminal eine Registrierkasse ist oder wobei das Terminal ein handgehaltenes Gehäuse aufweist.

13. System nach einem der Ansprüche 6 bis 12, das ferner folgendes aufweist: eine langgestreckte, biegbare, hohle Leitung mit einem Ende verbunden mit dem Kopf und einem gegenüberliegenden Ende verbunden mit dem Terminal, wobei die biegbare Leitung mehrfache Freiheiten der Bewegung besitzt, und wobei vorzugsweise die Leitermittel einen Draht aufweisen, der durch das Innere der Leitung verlegt ist.

14. System nach einem der vorhergehenden Ansprüche, das ferner folgendes aufweist: eine Scananordnung, die einen hin- und herbewegbar oszillierbaren Scanmotor (24) mit einer Antriebswelle (104), auf der ein Spiegel (196) für eine gemeinsame wiederholte und zyklische oszillierende Bewegung von einer Vielzahl von Malen pro Sekunde befestigt ist, aufweist, wobei der Spiegel den Laserstrahl zu der Bezugsebene hin und zu und über die zu lesenden Kennzeichnungen leitet bzw. richtet, um dieselben abzutasten bzw. zu scannen, wobei der Spiegel ebenfalls den rückkehrenden Teil des reflektierten Laserlichts sammelt und denselben zu den Abfühlmitteln leitet.

15. System nach einem der vorhergehenden Ansprüche, das ferner folgendes aufweist:
(A)eine Scan- bzw. Abtasteinheit, die folgendes aufweist:
(i) Lichtquellmittel zum Emittieren eines Laserstrahls,
(ii) optische Mittel zum optischen Modifizieren und Richten bzw. Leiten des Laserstrahls entlang eines optischen Pfads zu den Kennzeichnungen für eine Reflektion davon,
(iii) Sensor- bzw. Abfühlmittel mit einem Blickfeld und betriebsfähig zum Detektieren von mindestens einem Teil des Lichts variabler Intensität, das von den Kennzeichnungen wegreflektiert wurde und zum Erzeugen eines elektrischen analogen Signals, das die detektierte Lichtintensität anzeigt,
(iv) Scan- bzw. Abtastmittel zum Scannen des Laserstrahls und/oder des Blickfelds in einem Scan über die Kennzeichnungen;
(v) elektronische Verarbeitungsmittel betriebsfähig zum Konvertieren bzw. Wandeln des analogen Signals in ein elektrisches Signal, das die Kennzeichnungen, die gescannt werden, anzeigt; und
(vi) Mittel zum Befestigen der Lichtquellmittel, der optischen Mittel, der Sensormittel, der Scanmittel und der elektronischen Verarbeitungsmittel auf der Scaneinheit;
(B) eine Terminaleinheit betriebsmäßig verbunden mit der Scaneinheit und normalerweise entfernt davon angeordnet, wobei die Terminaleinheit folgendes aufweist:
(i) Tastaturmittel zum Ermöglichen einer Bedienungsperson, manuelle Information einzugeben, und zwar bezüglich der Kennzeichnungen, die gescannt werden, und
(ii) Anzeigemittel zum Anzeigen der Bedienungsperson der Information, die sich auf die Kennzeichnungen, die gescannt werden, bezieht;
(C) Lesesteuermittel angeordnet in mindestens einer der Einheiten und betriebsfähig zum Initiieren des Lesens der Kennzeichnungen und zum Beenden des Lesens der Kennzeichnungen auf eine erfolgreiche Bestimmung hin, daß die Kennzeichnungen erfolgreich gelesen wurden;
(D) Decodiermittel angeordnet in mindestens einer der Einheiten und betriebsfähig zum Decodieren des digitalen Signals in digitalisierte Daten, die die Kennzeichnungen, die gelesen werden, beschreiben;
(E) Datenspeichermittel angeordnet in mindestens einer der Einheiten und betriebsfähig zum Speichern der digitalisierten Daten, die die Kennzeichnungen, die gelesen werden, beschreiben;
(F) eine wiederaufladbare Strom- bzw. Spannungsver sorgung angeordnet in mindestens einer der Einheiten und betriebsfähig zum Liefern von elektrischer Leistung an die Einheiten; und
(G) Kommunikations- bzw. Verbindungsmittel zum Vorsehen von elektrischer Kommunikation bzw. Verbindung zwischen den Einheiten.

16. System nach Anspruch 15, wobei die elektronischen Verarbeitungsmittel ebenfalls auf der gedruckten Schaltungsplatine befestigt sind, um ein Scanplatinenmodul aufzubauen.

17. System nach Anspruch 15, wobei die Scaneinheit ferner Mittel aufweist zum Tragen des Gehäuses oberhalb einer Arbeitsoberfläche, über die die Kennzeichnungen passiert werden bzw. laufen.

18. System nach Anspruch 15, wobei die Kommunikationsmittel erste Sende-/Empfängermittel (transceiver means) auf der Scaneinheit aufweisen und betriebsfähig sind zum Übertragen bzw. Senden des digitalen Signals und/oder der digitalisierten Daten durch die Luft durch eine Übertragung elektromagnetischer Wellen zu den zweiten Sende-/Empfängermitteln auf der Terminaleinheit, wobei die zweiten Sende-/Empfängermittel betriebsfähig sind zum Empfangen des übertragenen digitalen Signals und/oder der digitalisierten Daten.

19. System nach Anspruch 15, wobei die Datenspeichermittel bei der Terminaleinheit angeordnet sind und wobei das Terminal Datentransfermittel bzw. Datenübertragungsmittel aufweist zum Übertragen der digitalisierten Daten, die in den Datenspeichermitteln gespeichert sind, und zwar zu einem entfernten Hostcomputer.

## Revendications

1. Un système de balayage pour lire des marques ayant des parties dont la réflectivité pour la lumière est différente, par exemple un symbole à code-barres ayant des barres alternées plus sombres séparées par des espaces plus clairs de largeurs variables,
ce système de balayage comprenant:
(a) une seule plaquette de circuit imprimé (16) constituant une plaquette ou un module de balayage de faible encombrement,
(b) une structure optique (30) montée sur la plaquette (16), cette structure optique comprenant des moyens constituant une source de lumière (33), des moyens optiques de formation de faisceau (32, 45), et des moyens détecteurs de lumière (17),
(c) une structure de balayage (19, 19b, 24) conçue pour balayer les marques,
l'alignement optique entre la structure optique et la structure de balayage étant assuré par la plaquette de circuit qui est supportée par ces structures, qui s'étend entre elles et qui remplit la fonction d'un support d'alignement optique, et
(d) des moyens définissant des montures antichoc (23a-d), incorporés pour réaliser un montage antichoc des structures par rapport à la tête.

2. Le système de la revendication 1, dans lequel la structure optique a un centre de masse, et la structure de balayage a de façon similaire un centre de masse, et chaque paire de montures antichoc est alignée selon un axe qui passe de façon générale par un centre de masse respectif d'une structure respective, de façon que par un montage antichoc des structures sur la tête, directement au niveau de leurs centres de masse respectifs, leurs composants les plus lourds n'aient pas tendance à tourner autour des axes respectifs selon lesquels chaque paire de montures antichoc est alignée.

3. Le système de la revendication 1 ou 2, dans lequel les moyens détecteurs ont un champ d'observation et sont capables de générer un signal électrique analogique représentatif de la lumière d'intensité variable qui est réfléchie par la marque;
des moyens de traitement de signal sur la plaquette sont adaptés pour convertir le signal analogique en un signal numérique représentatif de la marque;
les moyens de balayage sur la plaquette sont adaptés pour communiquer un mouvement de balayage à au moins un élément parmi un faisceau laser et le champ d'observation, de façon à balayer la marque; et
des moyens conducteurs sur la plaquette sont adaptés pour acheminer le signal numérique à partir de la plaquette.

4. Le système selon l'une quelconque des revendications précédentes, dans lequel les moyens constituant une source de lumière, les moyens optiques et les moyens de balayage sont montés de façon commune sur la plaquette, dans une relation d'alignement optique.

5. Le système selon la revendication 3 ou 4, dans lequel les moyens conducteurs consistent en un câble à ruban plat.

6. Le système de l'une quelconque des revendications précédentes, comprenant :
(A) une tête légère, portable, tenue à la main, comprenant des moyens de déclenchement de lecture sur la plaquette, ayant pour fonction de déclencher la lecture de la marque;
(B) un terminal connecté fonctionnellement à la tête et comprenant
des moyens de visualisation pour visualiser des données représentatives de la marque qui est lue,
des moyens consistant en un clavier pour permettre à l'opérateur d'introduire des informations concernant la marque qui est lue, et
des moyens d'enregistrement de données pour enregistrer les données représentatives de la marque qui est lue;
(C) des moyens de décodage se trouvant dans au moins un élément parmi la tête et le terminal, et ayant-pour fonction de décoder le signal numérique pour fournir les données représentatives de la marque qui est lue;
(D) une alimentation rechargeable se trouvant dans au moins un élément parmi la tête et le terminal, et ayant pour fonction de fournir de l'énergie électrique à la tête; et
(E) des moyens de terminaison de lecture, se trouvant dans au moins un élément parmi la tête et le terminal, et ayant pour fonction de mettre fin à la lecture de la marque sous l'effet d'une détermination du fait que la marque a été lue avec succès.

7. Le système selon l'une quelconque des revendications précédentes, dans lequel les moyens constituant une source de lumière comprennent une diode laser et un radiateur thermique pour évacuer de la diode la chaleur correspondant à des pertes.

8. Le système selon l'une quelconque des revendications précédentes, dans lequel la plaquette est une lame relativement mince et flexible.

9. Le système selon l'une quelconque des revendications 6 à 8, et comprenant en outre une base supportée sur une surface de support, et un conduit creux, allongé, pouvant être courbé, dont une extrémité est reliée à la tête, et une extrémité opposée est reliée à la base, ce conduit pouvant être courbé ayant de multiples degrés de liberté de mouvement.

10. Le système selon la revendication 9, dans lequel les moyens conducteurs comprennent un fil qui passe à l'intérieur du conduit.

11. Le système selon l'une quelconque des revendications 6 à 10 et comprenant en outre un câble électrique dont une extrémité est connectée à la base ou à la tête, et une extrémité opposée est connectée au terminal.

12. Le système selon l'une quelconque des revendications 6 à 11, dans lequel le terminal est une caisse enregistreuse, ou dans lequel le terminal comprend un boîtier tenu à la main.

13. Le système selon l'une quelconque des revendications 6 à 12, comprenant en outre un conduit allongé, creux et pouvant être courbé, dont une extrémité est reliée à la tête et une extrémité opposée est reliée au terminal, ce conduit pouvant être courbé ayant de multiples degrés de liberté de mouvement, et dans lequel, de préférence, les moyens conducteurs comprennent un fil qui passe à l'intérieur du conduit.

14. Le système de l'une quelconque des revendications précédentes, comprenant une structure de balayage qui comporte un moteur de balayage (24) que l'on peut faire osciller avec un mouvement alternatif, ayant un arbre d'entraînement (104) sur lequel un miroir (196) est monté pour effectuer un mouvement oscillant conjoint, répétitif et cyclique, plusieurs fois par seconde, ce miroir dirigeant le faisceau laser vers le plan de référence et vers la marque à lire, et sur l'étendue de celle-ci, pour la balayer, ce miroir collectant également la partie de retour de la lumière laser réfléchie et dirigeant celle-ci vers les moyens détecteurs.

15. Le système de l'une quelconque des revendications précédentes, comprenant :
(A) une unité de balayage comprenant :
(i) des moyens constituant une source de lumière pour émettre un faisceau laser,
(ii) des moyens optiques pour modifier et diriger le faisceau laser, de façon optique, selon un chemin optique allant vers la marque, pour qu'il soit réfléchi sur celle-ci,
(iii) des moyens détecteurs ayant un champ d'observation, et fonctionnant de manière à détecter au moins une partie de la lumière d'intensité variable qui est réfléchie par la marque, et à générer un signal électrique analogique représentatif de l'intensité lumineuse détectée,
(iv) des moyens de balayage pour communiquer un mouvement de balayage à au moins un élément parmi le faisceau laser et le champ d'observation, selon une configuration de balayage s'étendant sur la marque,
(v) des moyens de traitement électroniques ayant pour fonction de convertir le signal analogique en un signal électrique représentatif de la marque qui est balayée, et
(vi) des moyens pour monter sur l'unité de balayage les moyens constituant une source de lumière, les moyens optiques, les moyens détecteurs, les moyens de balayage et les moyens de traitement électronique;
(B) une unité consistant en un terminal, connectée fonctionnellement à l'unité de balayage et située normalement à distance de celle-ci, cette unité consistant en un terminal comprenant
(i) des moyens à clavier pour permettre à un opérateur d'introduire manuellement des informations concernant la marque qui est balayée au moment présent, et
(ii) des moyens de visualisation pour présenter à l'opérateur les informations concernant la marque qui est balayée au moment présent;
(C) des moyens de commande de lecture, se trouvant dans l'une au moins des unités précitées et ayant pour fonctions de déclencher la lecture de la marque, et de mettre fin à la lecture de la marque sous l'effet d'une détermination effective du fait que la marque a été lue avec succès;
(D) des moyens de décodage se trouvant dans l'une au moins des unités précitées, et ayant pour fonction de décoder le signal numérique pour fournir des données numérisées représentatives de la marque qui est lue;
(E) des moyens d'enregistrement de données se trouvant dans l'une au moins des unités précitées, et ayant pour fonction d'enregistrer les données numérisées représentatives de la marque qui est lue;
(F) une alimentation rechargeable se trouvant dans l'une au moins des unités précitées, et ayant pour fonction de fournir de l'énergie électrique aux unités; et
(G) des moyens de communication pour procurer une communication électrique entre les unités.

16. Le système selon la revendication 15, dans lequel les moyens de traitement électroniques sont également montés sur la plaquette de circuit imprimé, pour constituer un module de plaquette de balayage.

17. Le système selon la revendication 15, dans lequel l'unité de balayage comprend en outre des moyens pour supporter le boîtier au-dessus d'une surface de travail sur laquelle on fait passer les marques.

18. Le système selon la revendication 15, dans lequel les moyens de communication comprennent des premiers moyens émetteurs-récepteurs sur l'unité de balayage, ayant pour fonction de transmettre au moins une information parmi le signal numérique et les données numérisées, à travers l'air, par transmission d'ondes électromagnétiques, vers des seconds moyens émetteurs-récepteurs se trouvant dans l'unité consistant en un terminal, ces seconds moyens émetteurs-récepteurs ayant pour fonction de recevoir la ou les informations transmises parmi le signal numérique et les données numérisées.

19. Le système selon la revendication 15, dans lequel les moyens d'enregistrement de données se trouvent dans l'unité consistant en un terminal, et dans lequel le terminal comprend des moyens de transfert de données pour transférer vers un ordinateur hôte éloigné les données numérisées qui sont enregistrées dans les moyens d'enregistrement de données.
